# EUROPÄISCHE PATENTSCHRIFT

(11) **EP 1 470 011 B1**
(45) Veröffentlichungstag und Bekanntmachung des Hinweises auf die Patenterteilung: **24.08.2005**
(21) Anmeldenummer: 03773668.3
(22) Anmeldetag: 28.10.2003
(51) Int. Cl.: B60H 1/00

(54) **LUFTFÜHRUNGSELEMENT, INSBESONDERE LUFTFÜHRUNGSKANAL FÜR EIN KRAFTFAHRZEUG**
AIR GUIDING ELEMENT, ESPECIALLY AN AIR GUIDING CHANNEL FOR A MOTOR VEHICLE
ELEMENT DE GUIDAGE D'AIR, EN PARTICULIER CANAL DE GUIDAGE D'AIR POUR UN VEHICULE

(30) Priorität: 20.12.2002 DE 10261081
(43) Veröffentlichungstag der Anmeldung: 27.10.2004
(73) Patentinhaber: Carcoustics Tech Center GmbH, 51381 Leverkusen (DE)
(72) Erfinder: PROSSER, Werner, A-6800 Feldkirch (AT); LEDERER, Horst, A-6833 Fraxern (AT)
(74) Vertreter: Meyer, Hans-Joachim
(86) Internationale Anmeldenummer: PCT/EP2003/011947
(87) Internationale Veröffentlichungsnummer: WO 2004/058524

(56) Entgegenhaltungen:
- DE-A- 3 639 138
- DE-U- 9 100 514
- FR-A- 2 745 034
- US-B1- 6 178 764

## Beschreibung

Die Erfindung betrifft ein Luftführungselement, insbesondere einen Luftführungskanal für ein Kraftfahrzeug, mit einem aus Kunststoff hergestellten schallharten Kanalkörper, der mindestens einen durch ein schallabsorbierendes Bauteil ersetzten Wandbereich aufweist, wobei das schallabsorbierende Bauteil eine zumindest teilweise freiliegende Außenseite aufweist.

Ein derartiges Luftführungselement ist aus der DE 91 00 514 U1 bekannt. Das bekannte Luftführungselement besteht aus einem Kanalkörper, der als Spritzgießteil aus schallhartem Kunststoff, z.B. Polypropylen hergestellt ist. In der Wandung des formstabilen Kanalkörpers ist eine fensterartige Öffnung ausgespart. Diese Aussparung ist mit einem schalldämmend sowie schalldämpfend wirkenden Dämmteil abgedeckt. Das Dämmteil besteht aus Melaminharzschaumstoff, der innen- und außenseitig durch ein Textilstoff-Vlies umhüllt ist. Die Halterung des Dämmteils an dem Kanalkörper ist in der Weise realisiert, dass eine untere Randkante des Dämmteils in eine Klemmhalterung eingesteckt ist und zumindest eine obere Randkante des Dämmteils mit dem Kanalkörper vernietet, verklipst oder verschraubt ist. Die Randkante und die Klemmhalterung sind nach Art einer Nut-/Federaufnahme ausgebildet, wobei das Dämmteil entlang der unteren Randkante über eine Einschubleiste an dem Kanalkörper klemmgehaltert ist. An den seitlichen Randbereichen bzw. Randkanten des Dämmteils können ebenfalls Verklipsungen, Schraubverbindungen oder Vernietungen vorgesehen sein. Die Herstellung dieses Luftführungselementes ist insbesondere aufgrund der die Einschubleiste umfassenden Klemmhalterung relativ zeit- und kostenaufwendig.

Des weiteren sind gattungsgemäße Luftführungselemente bekannt, bei denen das schallabsorbierende Bauteil mittels eines Klebers am Rand der fensterartigen Öffnung bzw. Aussparung des Kanalkörpers angeklebt ist. Derartige Luftführungselemente sind beispielsweise in den japanischen Patentanmeldungen JP 6156052 und JP 6156054 beschrieben. Um eine zuverlässige Klebeverbindung sicherzustellen, ist es in der Regel erforderlich, die Klebeflächen vorab einer geeigneten Oberflächenbehandlung zu unterziehen. Besteht der Kanalkörper z.B. aus Polypropylen und das schallabsorbierende Bauteil aus Polyethylenterephtalat, so wird üblicherweise vorab eine Plasmabehandlung der Klebeflächen durchgeführt, um eine zuverlässige Haftung des Klebers an dem Kanalkörper und dem schallabsorbierenden Bauteil sicherzustellen. Aufgrund des Einsatzes von Kleber und der gegebenenfalls notwendigen Oberflächenbehandlung der Klebeflächen sind auch diese Luftführungselemente relativ teuer in ihrer Herstellung.

Aufgabe der vorliegenden Erfindung ist es, ein Luftführungselement der eingangs genannten Art so zu modifizieren, dass es bei gleicher oder sogar verbesserter akustischer Wirkung kostengünstiger herstellbar ist.

Diese Aufgabe wird erfindungsgemäß im wesentlichen dadurch gelöst, dass ein Randbereich des schallabsorbierenden Bauteils mit dem Kunststoff des Kanalkörpers derart umspritzt wird, dass das schallabsorbierende Bauteil zumindest abschnittsweise entlang seines Umfangs formschlüssig mit dem Kanalkörper verbunden ist. Das schallabsorbierenden Bauteil ist in dem Kanalkörper somit rahmenartig gehalten.

Das erfindungsgemäße Luftführungselement erfordert für die Halterung des schallabsorbierenden Bauteils weder die Verwendung einer Einschubleiste noch Verklipsungen, Schraubverbindungen oder Vernietungen, noch die Verwendung von Kleber, noch eine Oberflächenbehandlung in Form einer Plasmabehandlung. Die Herstellung des erfindungsgemäßen Luftführungselements erfordert somit weniger Arbeitsschritte als herkömmliche gattungsgemäße Luftführungselemente. Zudem lässt sich die Herstellung erfindungsgemäßer Luftführungselemente leichter automatisieren, als dies bei den oben erwähnten bekannten Luftführungselementen der Fall ist. Die Erfindung ermöglicht somit eine wesentlich schnellere, prozesssichere und kostengünstigere Herstellung gattungsgemäßer Luftführungselemente.

Insbesondere können nun auch relativ kleine sowie komplex geformte Aussparungen gattungsgemäßer Luftführungselemente kostengünstig mit schallabsorbierenden Wandabschnitten versehen werden.

Eine vorteilhafte Ausgestaltung des erfindungsgemäßen Luftführungselements ist dadurch gekennzeichnet, dass das schallabsorbierende Bauteil entlang seines gesamten Umfangs formschlüssig mit dem Kanalkörper verbunden ist. Auf diese Weise kann eine umlaufende Abdichtung am Rand des schallabsorbierenden Bauteils erzielt werden. Sollten an dem schallabsorbierenden Bauteil aufgrund seines Aufbaus aus einer luftdurchlässigen Absorberlage unakzeptabel hohe Luft- bzw. Druckverluste auftreten, so kann dies nach einer weiteren Ausgestaltung der Erfindung gegebenenfalls dadurch vermieden werden, dass das schallabsorbierende Bauteil außenseitig mit einer luftundurchlässigen oder weitgehend luftundurchlässigen, mikroperforierten Folie versehen wird.

Eine weitere bevorzugte Ausgestaltung der Erfindung besteht darin, dass der Kanalkörper des Luftführungselements als einstückiger Hohlkörper ausgebildet ist. Das heißt, der Kanalkörper wird nicht aus mehreren Teilen, etwa aus zwei Hälften zusammengesetzt, sondern als einstückiger Hohlkörper im Spritzgießverfahren hergestellt. Hierdurch werden die Arbeitsschritte bei der Herstellung des Luftführungselements weiter reduziert. Es versteht sich, dass es aber auch möglich ist, den Kanalkörper aus mehreren Teilen, insbesondere aus zwei Hälften zusammenzusetzen.

Das schallabsorbierende Bauteil kann vorzugsweise eine luftdurchlässige Lage aus Polyethylenterephtalat (PET) aufweisen. Diese Lage kann zusätzlich ein- oder beidseitig mit einem Vliesstoff beschichtet sein. Grundsätzlich kann das schallabsorbierende Bauteil aber nicht nur aus PET, sondern auch aus anderen geeigneten schallabsorbierenden Materialien bzw. Verbundmaterialien bestehen.

Sowohl der Kanalkörper als auch das schallabsorbierende Bauteil sowie gegebenenfalls eine an der Außenseite des schallabsorbierenden Bauteils angeordnete Folie können jeweils aus Polyethylenterephtalat (PET) bestehen. Hierdurch wird ein sortenreines Recycling des Luftführungselements ermöglicht bzw. erleichtert.

Weitere bevorzugte und vorteilhafte Ausgestaltungen der Erfindung sind in den Unteransprüchen angegeben.

Nachfolgend wird die Erfindung anhand einer mehrere Ausführungsbeispiele darstellenden Zeichnung näher erläutert. Es zeigen:

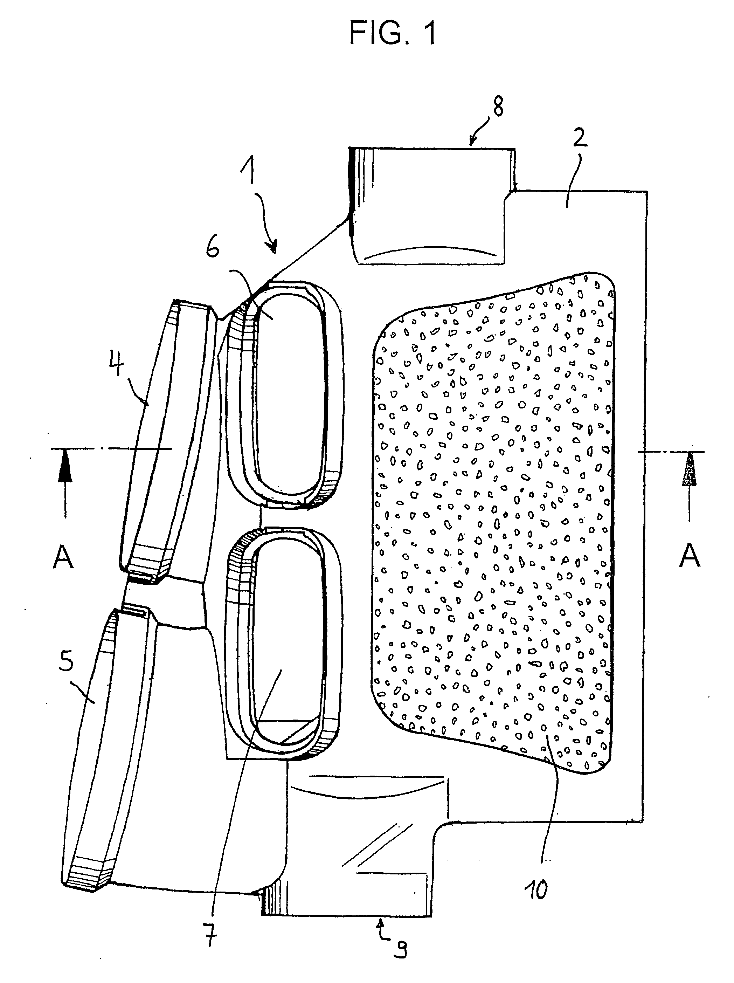

- Fig. 1: eine Draufsicht eines Luftführungselements in Form eines mehrere Abzweige aufweisenden Lüftungskanals;
- Fig. 2: eine Unteransicht des Luftführungselements gemäß Fig. 1; und
- Fig. 3: eine Schnittansicht des Luftführungselements gemäß Fig. 1, geschnitten entlang der Linie A-A.

Das in der Zeichnung dargestellte Luftführungselements 1 ist zum Einbau in ein Kraftfahrzeug bestimmt. Das Luftführungselements 1 besteht aus einem aus Kunststoff hergestellten schallharten Kanalkörper 2, der hier der Luftverteilung auf mehrere Luftaustrittsdüsen (nicht gezeigt) dient. Im eingebauten Zustand wird über die Anschlussöffnung 3 Luft zugeführt und über die Abzweigöffnungen 4, 5, 6, 7, 8 und 9 auf die Luftaustrittsdüsen verteilt.

Bei der Erzeugung einer Luftströmung durch einen Ventilator im Kraftfahrzeug und bei der Führung bzw.

Umlenkung der Luftströmung entstehen Lüftungsgeräusche, die von den Fahrzeuginsassen häufig als störend empfunden werden. Auch können über die aus Kanälen und/oder Schläuchen gebildete Luftführung Motorgeräusche in das Wageninnere übertragen werden.

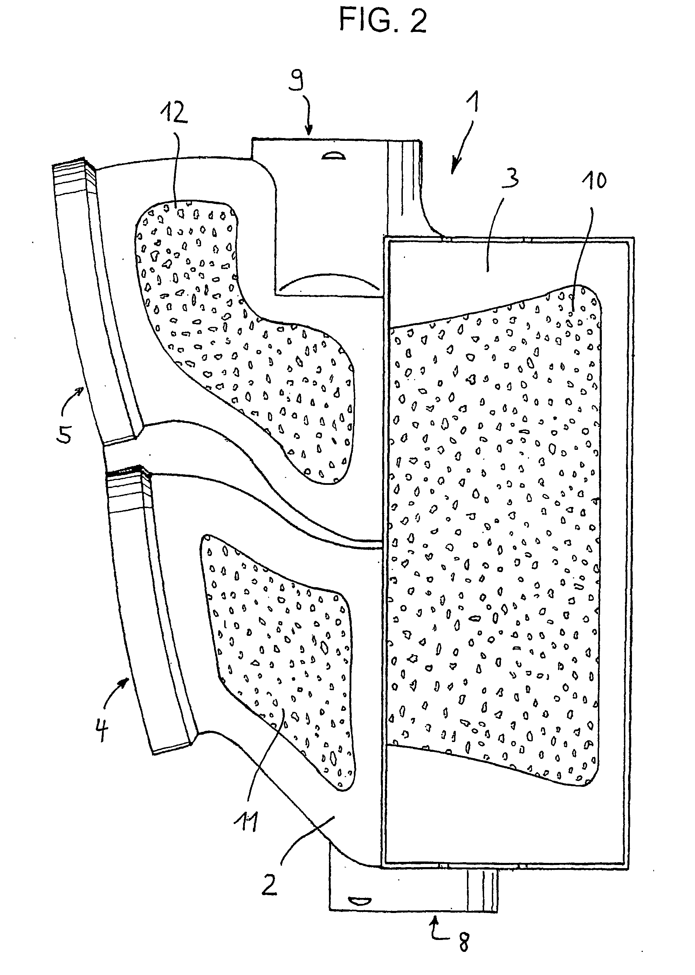

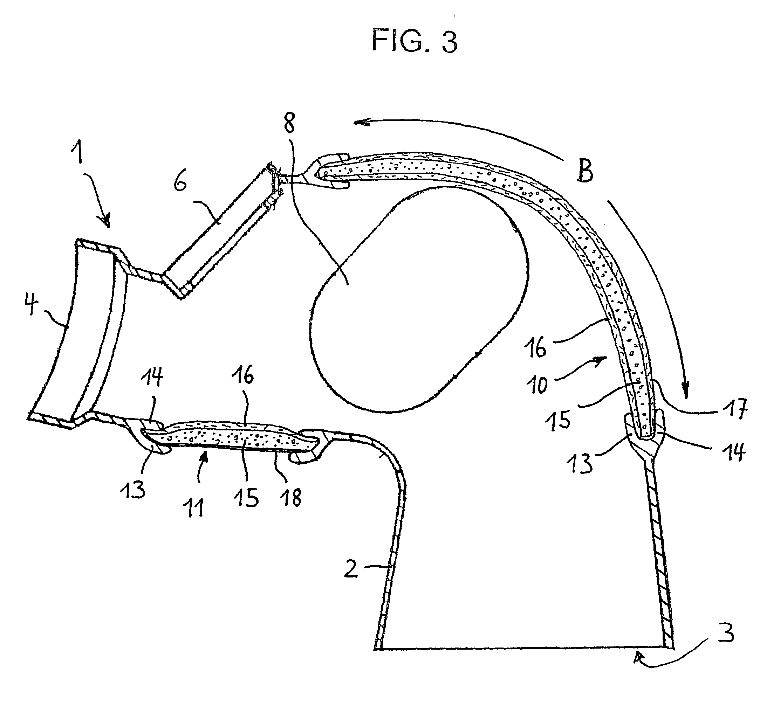

Um solche Lüftungs- und Motorgeräusche zu dämpfen bzw. zu verringern, ist mindestens ein Wandbereich des schallharten Kanalkörpers 2 durch ein schallabsorbierendes Bauteil 10, 11 bzw. 12 ersetzt. In dem dargestellten Ausführungsbeispiel ist ein krümmungsäußerer Wandbereich über die Bogenlänge B durch ein schallabsorbierendes Bauteil 10 ersetzt. Darüber hinaus können an dem krümmungsinneren Wandbereich des Kanalkörpers 2, und zwar nahe den Abzweigöffnungen 4 bis 9 zwei weitere schallabsorbierende Bauteile 11 und 12 angeordnet sein (vgl. Figuren 2 und 3).

Der Kanalkörper 2 ist ein Spritzgießteil, das aus Polypropylen, Polyethylenterephtalat (PET) oder einem anderen geeigneten Thermoplasten im so genannten "One-Shot-Verfahren" hergestellt ist. Der Kanalkörper 2 ist vorzugsweise als einstückiges Spritzgießteil ausgebildet. Es sind jedoch auch Ausführungen des Kanalkörpers möglich, die sich vorteilhafter aus mehreren Teilen bilden lassen. In solchen Fällen können die Teile bzw. Hälften beispielsweise durch Verschweißen bzw. Heißsiegeln oder durch Klammern, Clipse oder dergleichen miteinander verbunden werden.

Die schallabsorbierenden Bauteile 10, 11, 12 werden als akustisch wirksames Material in ein Spritzgießwerkzeug (nicht gezeigt) eingelegt. Dies kann vorzugsweise mittels eines Roboters oder dergleichen automatisiert erfolgen.

Das Spritzgießwerkzeug (Spritzgießform) ist so ausgebildet, dass die schallabsorbierenden Bauteile 10, 11, 12 jeweils an ihrem Rand derart umspritzt werden, dass das jeweilige schallabsorbierende Bauteil zumindest abschnittsweise entlang seines Umfangs formschlüssig mit dem Kanalkörper 2 verbunden ist. Bevorzugt ist jedoch eine Ausgestaltung, bei der das jeweilige schallabsorbierende Bauteil 10, 11 bzw. 12 entlang seines gesamten Umfangs formschlüssig mit dem Kanalkörper 2 verbunden ist.

Das schallabsorbierende Bauteil 10, 11 bzw. 12 liegt sowohl an seiner Innenseite als auch an seiner Außenseite weitgehend frei. Nur sein Rand ist umspritzt. Der Kanalkörper 2 bildet somit eine Art Rahmen für das jeweilige schallabsorbierende Bauteil 10, 11 bzw. 12.Um dies zu erreichen, ist eine besondere Werkzeugtechnik erforderlich, bei der die schallabsorbierenden Bauteile 10, 11, 12 zwischen zwei oder mehreren Werkzeugteilen so eingespannt werden, dass die thermoplastische Spritzgießmasse den Rand des jeweiligen schallabsorbierenden Bauteils umspritzt, jedoch die Innenseite und Außenseite des schallabsorbierenden Bauteils nicht bedeckt. Es entsteht somit eine fensterartige Aussparung im Kanalkörper 2, die durch das schallabsorbierende Bauteil 10, 11 bzw. 12 verschlossen ist. Wie in Fig. 3 zu erkennen ist, ist der Rand des jeweiligen schallabsorbierenden Bauteils somit in einer umlaufenden Nut gehalten bzw. von umlaufenden Stegen 13, 14 umgriffen.

Die schallabsorbierenden Bauteile 10, 11, 12 selbst können aus verschiedenen schallabsorbierenden Materialien bestehen. Beispielsweise kann eine poröse, luftdurchlässige Schaumstofflage und/oder Vlieslage zum Einsatz kommen. Eine bevorzugte Ausgestaltung besteht insbesondere darin, für das schallabsorbierende Bauteil 10, 11 bzw. 12 eine luftdurchlässige Lage 15 aus Polyethylenterephtalat zu verwenden.

Vorteilhaft sind ferner auch Sandwich-Strukturen. So ist bei dem hier dargestellten Ausführungsbeispiel die luftdurchlässige Lage 15 des schallabsorbierenden Bauteils mit einem Trägervlies 16 und einem Abdeckvlies 17 versehen.

Der außenliegende Vliesstoff 17 kann zusätzlich mit einer luftundurchlässigen Folie bedeckt sein, um gegebenenfalls Luftverluste über das schallabsorbierende Bauteil zu verhindern. In Fig. 3 besteht das schallabsorbierenden Bauteil 11 aus einer luftdurchlässige Lage 15, die innenseitige mit einem Vliesstoff 16 und außenseitig mit einer luftundurchlässigen Folie 18 kaschiert ist.

Es kann unter bestimmten Umständen auch vorteilhaft sein, wenn an der Außenseite der luftdurchlässigen Lage 15 oder an der Außenseite des Vliesstoffes 17 eine mikroperforierte Folie (nicht gezeigt) angeordnet wird.

Das im krümmungsäußeren Wandbereich des Kanalkörpers 2 angeordnete schallabsorbierende Bauteil 10 kann vorab einem Formgebungsprozess unterzogen worden sein, damit es der Krümmung bzw. Form des Kanalkörpers 2 optimal angepasst ist. Es ist allerdings auch möglich, plattenförmiges Absorbermaterial zu verwenden, das erst während des Spritzgießvorgangs entsprechend der Kontur des Kanalkörpers 2 geformt wird.

Die vorliegende Erfindung ist nicht auf die vorstehend beschriebenen und in der Zeichnung dargestellten Ausführungsbeispiele beschränkt. Vielmehr sind eine Reihe von Varianten denkbar, die auch bei grundsätzlich abweichender Gestaltung von dem in den Ansprüchen definierten Erfindungsgedanken Gebrauch machen. So ist es beispielsweise auch möglich, das schallabsorbierende Bauteil 10 unterschiedlich dick, insbesondere keilförmig auszubilden. Auch liegt es im Rahmen der Erfindung, schallabsorbierende Bauteile 10, 11, 12 mit einer strukturierten Innenseite, beispielsweise einer wellenförmigen oder Erhebungen aufweisenden Innenseite zu verwenden.

## Patentansprüche

1. Luftführungselement (1), insbesondere Luftführungskanal für ein Kraftfahrzeug, mit einem aus Kunststoff hergestellten schallharten Kanalkörper (2), der mindestens einen durch ein schallabsorbierendes Bauteil (10, 11, 12) ersetzten Wandbereich aufweist, wobei das schallabsorbierende Bauteil eine zumindest teilweise freiliegende Außenseite aufweist,
**dadurch gekennzeichnet, dass** ein Randbereich des schallabsorbierenden Bauteils (10, 11, 12) mit dem Kunststoff des Kanalkörpers (2) derart umspritzt ist, dass das schallabsorbierende Bauteil (10, 11, 12) zumindest abschnittsweise entlang seines Umfangs formschlüssig mit dem Kanalkörper (2) verbunden ist.

2. Luftführungselement nach Anspruch 1,
**dadurch gekennzeichnet, dass** das schallabsorbierende Bauteil (10, 11, 12) entlang seines gesamten Umfangs formschlüssig mit dem Kanalkörper (2) verbunden ist.

3. Luftführungselement nach Anspruch 1 oder 2,
**dadurch gekennzeichnet, dass** das schallabsorbierende Bauteil (10, 11, 12) aus einer porösen, luftdurchlässigen Lage (15) aus schallabsorbierendem Material gebildet ist.

4. Luftführungselement nach einem der Ansprüche 1 bis 3,
**dadurch gekennzeichnet, dass** das schallabsorbierende Bauteil (10, 11, 12) aus einer luftdurchlässigen Lage (15) aus Polyethylenterephtalat gebildet ist.

5. Luftführungselement nach Anspruch 3 oder 4,
**dadurch gekennzeichnet, dass** die luftdurchlässige Lage (15) des schallabsorbierenden Bauteils mit einem Trägervlies (16) und/oder einem Abdeckvlies (17) versehen ist.

6. Luftführungselement nach einem der Ansprüche 1 bis 5,
**dadurch gekennzeichnet, dass** das schallabsorbierende Bauteil (11) außenseitig mit einer luftundurchlässigen Folie (18) versehen ist.

7. Luftführungselement nach einem der Ansprüche 1 bis 6,
**dadurch gekennzeichnet, dass** das schallabsorbierende Bauteil (10, 11, 12) außenseitig mit einer mikroperforierten Folie versehen ist.

8. Luftführungselement nach einem der Ansprüche 1 bis 7,
**dadurch gekennzeichnet, dass** das schallabsorbierende Bauteil (10) als gekrümmtes Formteil ausgebildet ist.

9. Luftführungselement nach einem der Ansprüche 1 bis 8,
**dadurch gekennzeichnet, dass** der Kanalkörper (2) als einstückiger Hohlkörper ausgebildet ist.

10. Luftführungselement nach einem der Ansprüche 1 bis 9,
**dadurch gekennzeichnet, dass** der Kanalkörper (2) und das schallabsorbierende Bauteil (10, 11, 12) sowie gegebenenfalls eine an der Außenseite des schallabsorbierenden Bauteils angeordnete Folie (18) jeweils aus Polyethylenterephtalat gebildet sind.

## Claims

1. An air conduction element (1), particularly an air conduction channel for a motor vehicle, having a reverberant channel body (2) manufactured from plastic, which has at least one wall region replaced by a sound-absorbing component (10, 11, 12), the sound-absorbing component having an at least partially exposed outer side,
**characterized in that** an edge region of the sound-absorbing component (10, 11, 12) is extrusion-coated with the plastic of the channel body (2) in such a way that the sound-absorbing component (10, 11, 12) is connected in a form-fitting way to the channel body (2) along at least a section of its circumference.

2. The air conduction element according to Claim 1, **characterized in that** the sound-absorbing component (10, 11, 12) is connected in a form-fitting way to the channel body (2) along its entire circumference.

3. The air conduction element according to Claim 1 or 2, **characterized in that** the sound-absorbing component (10, 11, 12) is produced from a porous, air-permeable layer (15) made of sound-absorbing material.

4. The air conduction element according to any one of Claims 1 to 3, **characterized in that** the sound-absorbing component (10, 11, 12) is produced from an air-permeable layer (15) made of polyethylene terephthalate.

5. The air conduction element according to Claim 3 or 4, **characterized in that** the air-permeable layer (15) of the sound-absorbing component is provided with a carrying nonwoven (16) and/or a covering nonwoven (17).

6. The air conduction element according to any one of Claims 1 to 5, **characterized in that** the sound-absorbing component (11) is provided on the outside with a film (18) which is impermeable to air.

7. The air conduction element according to any one of Claims 1 to 6, **characterized in that** the sound-absorbing component (10, 11, 12) is provided on the outside with a microperforated film.

8. The air conduction element according to any one of Claims 1 to 7, **characterized in that** the sound-absorbing component (10) is implemented as a curved molded part.

9. The air conduction element according to any one of Claims 1 to 8, **characterized in that** the channel body (2) is implemented as a one-piece hollow body.

10. The air conduction element according to any one of Claims 1 to 9, **characterized in that** the channel body (2) and the sound-absorbing component (10, 11, 12) and possibly a film (18) positioned on the outside of the sound-absorbing component are each produced from polyethylene terephthalate.

## Revendications

1. Elément de guidage d'air (1), en particulier canal de guidage d'air pour un véhicule automobile, comprenant un corps de canal (2) réverbérant fabriqué en plastique qui présente au moins une région de paroi remplacée par un composant absorbant le son (10, 11, 12),
le composant absorbant le son présentant un côté extérieur au moins partiellement libre,
**caractérisé en ce qu'**une région de bord du composant absorbant le son (10, 11, 12) est couverte par extrusion avec le plastique du corps de canal (2) de sorte que le composant absorbant le son (10, 11, 12) est relié au moins par portions le long de sa périphérie par engagement positif avec le corps de canal (2).

2. Elément de guidage d'air selon la revendication 1,
**caractérisé en ce que**
le composant absorbant le son (10, 11, 12) est relié le long de l'ensemble de sa périphérie par engagement positif avec le corps de canal (2).

3. Elément de guidage d'air selon la revendication 1 ou 2,
**caractérisé en ce que**
le composant absorbant le son (10, 11, 12) est formé d'une couche poreuse perméable à l'air (15) en un matériau absorbant le son.

4. Elément de guidage d'air selon l'une quelconque des revendications 1 à 3,
**caractérisé en ce que**
le composant absorbant le son (10, 11, 12) est formé d'une couche perméable à l'air (15) en téréphtalate de polyéthylène.

5. Elément de guidage d'air selon la revendication 3 ou 4,
**caractérisé en ce que**
la couche perméable à l'air (15) du composant absorbant le son est pourvue d'un non-tissé de support (16) et/ou d'un non-tissé de recouvrement (17).

6. Elément de guidage d'air selon l'une quelconque des revendications 1 à 5,
**caractérisé en ce que**
le composant absorbant le son (11) est pourvu sur le côté extérieur d'une feuille imperméable à l'air (18).

7. Elément de guidage d'air selon l'une quelconque des revendications 1 à 6,
**caractérisé en ce que**
le composant absorbant le son (10, 11, 12) est pourvu sur le côté extérieur d'une feuille microperforée.

8. Elément de guidage d'air selon l'une quelconque des revendications 1 à 7,
**caractérisé en ce que**
le composant absorbant le son (10) est réalisé en tant que pièce moulée courbée.

9. Elément de guidage d'air selon l'une quelconque des revendications 1 à 8,
**caractérisé en ce que**
le corps de canal (2) est réalisé en tant que corps creux d'une pièce.

10. Elément de guidage d'air selon l'une quelconque des revendications 1 à 9,
**caractérisé en ce que**
le corps de canal (2) et le composant absorbant le son (10, 11, 12) ainsi qu'éventuellement une feuille (18) disposée sur le côté extérieur du composant absorbant le son sont respectivement formés de téréphtalate de polyéthylène.
